# EUROPÄISCHE PATENTANMELDUNG

(11) **EP 2 676 841 A1**
(43) Veröffentlichungstag der Anmeldung: **25.12.2013**
(21) Anmeldenummer: 13173200.0
(22) Anmeldetag: 21.06.2013
(51) Int. Cl.: B60Q 3/00, B60Q 3/02, F21V 8/00, G09F 13/18, B29C 41/20, B60R 13/02

(54) **Beleuchtbares Verkleidungsbauteil für ein Fahrzeug und Verfahren zu dessen Herstellung**

(30) Priorität: 21.06.2012 DE 102012105412
(71) Anmelder: International Automotive Components Group GmbH, 47804 Krefeld (DE)
(72) Erfinder: Seegers, Huib, 5629PG Eindhoven (NL); Rijpkema, Henk, 5991LV Baarlo (NL)
(74) Vertreter: Liesegang, Eva

(57) **Zusammenfassung**

Eine Innenraumbeleuchtung mit einem durchleuchtbaren Kunststoffkörper (10), welcher an seiner Vorderseite (26) und/oder an seiner Rückseite (24) eine dreidimensionale Oberflächenstruktur (32, 36, 36', 38) mit einer Strukturierungstiefe (d) von wenigstens 0,3 mm aufweist, erlaubt eine optisch ansprechende, hochwertig erscheinende Darstellung dreidimensionaler Strukturen und Symbole. Die dreidimensionale Struktur ist vom Fahrzeuginnenraum aus sowohl im beleuchteten Zustand als auch im unbeleuchteten Zustand erkennbar. Farbige oder reflektierende Deckschichten (54, 56) an der Vorderseite (26) und/oder Rückseite (24) des Kunststoffkörpers (10) können den Kontrast zusätzlich erhöhen. Das beleuchtbare Innenausstattungselement kann im Guss- oder Spritzgussverfahren mit nahezu beliebigen Oberflächenstrukturen (32, 36, 36', 38) hergestellt werden.

## Beschreibung

### Gebiet der Erfindung

Die Erfindung bezieht sich auf ein beleuchtbares Innenausstattungselement zur indirekten Beleuchtung eines Fahrzeuginnenraums, welches in ein Verkleidungsbauteil eines Fahrzeugs aufgenommen ist.

### Hintergrund der Erfindung und relevanter Stand der Technik

Eine blendfreie, ein angenehmes Raumgefühl vermittelnde Innenraumbeleuchtung ist ein wichtiger Gesichtspunkt bei der Gestaltung moderner Fahrzeuginnenräume. Aus der U.S.-Patentschrift US 8,075,173 B2 ist ein Beleuchtungspaneel bekannt, welches sich als Band längs der gesamten Instrumententafel in einer Öffnung zwischen einem oberen Verkleidungselement und einem unteren Verkleidungselement und bis in die fahrer- und beifahrerseitigen Türen erstreckt. Dieses Beleuchtungspaneel ist aus klarem transparentem Acryl oder Polycarbonat ausgebildet und weist zum Fahrzeuginnenraum hin eine Klarlackoberfläche und auf seiner Rückseite eine farbige reflektierende Oberfläche auf. Von einem entlang einer Seitenkante des Beleuchtungspaneels verdeckt verlaufenden Lichtleiter wird Licht in das Beleuchtungspaneel eingespeist. Dieses Licht wird innerhalb des Paneels und an der rückseitigen reflektierenden Oberfläche reflektiert und tritt dann über die gesamte vorderseitige Oberfläche des Beleuchtungspaneels in den Fahrzeuginnenraum. Auf diese Weise kann der Fahrzeuginnenraum bei Dämmerung oder Dunkelheit homogen und blendfrei beleuchtet werden. Die homogene Klarlackoberfläche wird tagsüber jedoch nicht von allen Fahrzeugpassagieren als attraktiv und angenehm empfunden. Viele Autofahrer bevorzugen im Fahrzeuginnenraum strukturierte oder gemaserte Oberflächen, wie sie viele natürliche Werkstoffe, beispielsweise Holz, aufweisen. Diese Strukturierung sollte vorzugsweise auch nachts oder in Dämmerlicht sichtbar bleiben, um den Fahrzeugpassagieren ein angenehmes Raumgefühl zu vermitteln. Fahrzeughersteller wünschen sich ebenfalls oftmals strukturierte beleuchtbare Oberflächen, um dort eine Modell- oder Typenbezeichnung effektvoll zu integrieren.

Aus der DE 10 2005 005 682 A1 ist eine beleuchtbare Innenausstattung eines Fahrzeugs mit einer dünnen, durchleuchtbaren strukturierten Oberflächenschicht bekannt: Die Oberflächenschicht kann natürliche Materialien wie Holzfurniere oder Lederschichten umfassen, deren Struktur bei der Durchleuchtung sichtbar wird. Die Herstellung solcher dünnen Paneele aus natürlichen Werkstoffen ist jedoch aufwendig, zeit- und kostenintensiv. Zudem variieren natürliche Materialien von Werkstück zu Werkstück, so dass sich der Beleuchtungseffekt mit solchen Materialien nur ungenau reproduzieren lässt. Die DE '682 schlägt zur indirekten Innenraumbeleuchtung zusätzlich oder alternativ auch farbregelbare Folien, beispielsweise Drei-Schicht-Folien mit den Farben Rot, Grün und Blau, vor, mit denen sich willkürliche Formen ebenso wie Symbole, Schriftzüge, Buchstaben oder dergleichen darstellen lassen. Solche Folien lassen sich in großer Stückzahl und genau reproduzieren, können jedoch keine dreidimensionalen Strukturen darstellen. Zudem werden Kunststofffolien von einigen Autofahrern als optisch wenig ansprechend empfunden.

Ein hinterleuchtetes Dekorelement für Fahrzeuge mit einer Dekorschicht aus einem lederähnlichen Material, welches eine genarbte Oberflächenstruktur mit Narbenbergen und Narbentälern aufweist, ist aus der Offenlegungsschrift DE 10 2009 000 605 A1 bekannt.

Die Gebrauchsmusterschrift DE 20 2007 016 053 U1 offenbart ein leuchtendes Dekorteil für einen Fahrzeuginnenraum mit einer Trägerschicht, in welche lumineszierendes Material integriert ist, und einer Dekorschicht an der Oberseite der Trägerschicht.

Die Offenlegungsschrift DE 10 2009 060 355 A1 offenbart eine Beleuchtungseinrichtung für den Innenraum eines Fahrzeugs mit einem ersten Lichtleitkörper und einem zweiten Lichtleitkörper, die in einem gemeinsamen Grundkörper aufgenommen sind und von seitwärts oder rückseitig angeordneten Leuchtdioden beleuchtet werden. Die Grenzflächen der Lichtleitkörper können strukturiert ausgebildet sein.

Ein Dekorelement für einen Fahrzeuginnenraum mit einer in einer Folie ausgebildeten dekorativen Struktur ist in der Offenlegungsschrift DE 10 2009 017 363 A1 beschrieben. Die Folie ist mit einer transparenten Kunststoffschicht hinterspritzt, welche verdickte Bereiche aufweist, die als Auskopplungselemente für seitlich in Kunststoffschicht eingestrahltes Licht dienen.

Die Offenlegungsschrift DE 10 2011 016 417 A1 offenbart ein von einer rückseitigen Lichtquelle durchleuchtetes Dekorteil mit einem transparenten Träger, auf dessen Vorderseite eine Folie ausgebildet ist und auf dessen der Lichtquelle zugewandten Rückseite strukturierte Riefen als Prismen wirken.

Es besteht daher Bedarf nach einer verbesserten indirekten Innenraumbeleuchtung für ein Kraftfahrzeug, welche dreidimensionale Strukturen darstellt, sowohl im eingeschalteten als auch im ausgeschalteten Zustand als optisch ansprechend und hochwertig empfunden wird und sich dabei kostengünstig und genau reproduzierbar herstellen lässt.

### Überblick über die Erfindung

Diese Aufgabe wird mit einem beleuchtbaren Innenausstattungselement gemäß Anspruch 1 bzw. einem Verfahren zum Ausbilden eines beleuchtbaren Innenausstattungselements gemäß Anspruch 15 gelöst. Die abhängigen Ansprüche beziehen sich auf bevorzugte Ausführungsformen.

Ein erfindungsgemäßes beleuchtbares Innenausstattungselement zur Aufnahme in ein Verkleidungsbauteil eines Fahrzeugs umfasst einen zumindest in einer Tiefenrichtung durchleuchtbaren Kunststoffkörper, welcher an seiner Vorderseite und/oder an seiner Rückseite eine dreidimensionale Oberflächenstruktur mit einer Strukturierungstiefe von wenigstens 0,3 mm aufweist.

Die Ausbildung als durchleuchtbarer Kunststoffkörper ermöglicht es, das Innenausstattungselement kostengünstig und reproduzierbar, beispielsweise im Spritzguss-oder Gussverfahren, herzustellen. Dies ist ein Vorteil gegenüber Ausstattungselementen aus natürlichen Materialien wie Holz, Textilien oder Leder. Die Erfinder haben erkannt, dass sich mit einer dreidimensionalen Oberflächenstruktur an einer dem Fahrzeuginnenraum zugewandten Vorderseite und/oder an einer vom Fahrzeuginnenraum abgewandten Rückseite des Kunststoffkörpers ein sowohl tagsüber, d.h. im ausgeschalteten Zustand, als auch nachts oder im Dämmerlicht, d.h. im eingeschalteten Zustand, optisch hochwertig erscheinendes Dekorelement ausbilden lässt, sofern die Oberflächenstruktur ein hinreichend tiefes Relief aufweist. Insbesondere lassen sich tagsüber in Aufsicht und in Dunkelheit bei Durchleuchtung dreidimensionale Strukturen darstellen, wenn die Strukturierungstiefe wenigstens 0,3 mm beträgt.

Eine dreidimensionale Oberflächenstruktur im Sinne der Erfindung kann als eine Reliefstruktur verstanden werden, welche Erhebungen und Vertiefungen umfasst. Als Strukturierungstiefe im Sinne der Erfindung kann dabei insbesondere eine entlang der Tiefenrichtung gemessene Höhendifferenz zwischen einer Erhebung und einer benachbarten Vertiefung oder eine entlang der Tiefenrichtung gemessene Höhendifferenz zwischen einer höchsten Erhebung der Oberflächenstruktur und einer tiefsten Vertiefung der Oberflächenstruktur oder eine über eine Teilmenge der Oberflächenstruktur, insbesondere über die gesamte Oberflächenstruktur, gemittelte Höhendifferenz zwischen den Erhebungen und Vertiefungen der Teilmenge verstanden werden.

In einer bevorzugten Ausführungsform weist die Oberflächenstruktur eine Strukturierungstiefe von wenigstens 0,4 mm, insbesondere von wenigstens 0,6 mm und besonders vorzugsweise von wenigstens 1 mm auf.

Die Erfinder haben erkannt, dass sich durch Wahl einer hinreichend großen Strukturierungstiefe auch tagsüber, d.h. unter Auflicht, dem Fahrzeugpassagier dreidimensional erscheinende Strukturen ausbilden lassen. Nachts unter Beleuchtung wird dieser Effekt noch verstärkt.

Ein weiterer Vorteil eines Innenausstattungselements aus Kunststoff besteht darin, dass sich der durchleuchtbare Kunststoffkörper kostengünstig und reproduzierbar mit nahezu jeder gewünschten dreidimensionalen Oberflächenstruktur ausbilden lässt. Lediglich die Formteile für das Spritzgießen bzw. Gießen müssen entsprechend angepasst werden. Die Erfindung ermöglicht daher eine besonders große Vielfalt bei der Innenraumgestaltung.

Als dreidimensionale Oberflächenstruktur im Sinne der Erfindung kann dabei jede nichtflache oder nicht ebene Oberflächenstruktur verstanden werden.

In einer bevorzugten Ausführungsform umfasst die Oberflächenstruktur Schriftelemente, Buchstabensymbole oder Zahlsymbole.

Die Oberflächenstruktur kann Erhebungen und/oder Vertiefungen umfassen.

Die Oberflächenstruktur kann insbesondere Erhebungen und/oder Vertiefungen mit gekrümmter Oberfläche, vorzugsweise ellipsoider oder halblcugelförmiger Oberfläche, umfassen.

Die Oberflächenstruktur kann alternativ oder zusätzlich auch Erhebungen und/oder Vertiefungen mit einer abgekanteten Oberflächenstruktur umfassen.

Eine abgekantete Oberflächenstruktur im Sinne der Erfindung kann eine Oberflächenstruktur sein, die mindestens eine Kante umfasst, wobei die mindestens eine Kante zwei oder mehr gekrümmte oder ebene Flächen der Oberflächenstruktur mit unterschiedlicher Krümmung und/oder Neigung verbindet.

In einer Ausführungsform umfasst die Oberflächenstruktur streifenförmige Erhebungen und/oder streifenförmige Vertiefungen.

Die Streifen der streifenförmigen Erhebungen bzw. Vertiefungen können stückweise parallel verlaufen oder können sich schneiden.

Die Oberflächenstruktur kann eine matte oder eine glänzende Oberfläche umfassen.

Die Oberflächenstruktur kann auch abschnittsweise matt und abschnittsweise glänzend sein.

Die Oberflächenstruktur kann zumindest abschnittsweise periodisch oder regelmäßig strukturiert sein.

Die Oberflächenstruktur kann auch zumindest abschnittsweise unregelmäßig strukturiert sein.

In einer bevorzugten Ausführungsform ist die dreidimensionale Oberflächenstruktur nur an der dem Fahrzeuginnenraum abgewandten Rückseite des Kunststoffkörpers ausgebildet, während die dem Fahrzeuginnenraum zugewandte Vorderseite des Kunststoffkörpers glatt oder eben ist oder eine weniger tiefe Reliefstruktur aufweist. Dadurch lässt sich einem unerwünschten Verschmutzen der dem Innenraum zugewandten Vorderseite entgegenwirken.

Der erfindungsgemäße Kunststoffkörper ist leicht und lässt sich flexibel an nahezu jede Einbausituation anpassen. Darin liegt ein weiterer besonderer Vorteil der Erfindung, insbesondere im Vergleich zu natürlichen Materialien wie Holz oder Leder.

In einer bevorzugten Ausführungsform ist der Kunststoffkörper länglich und/oder bandförmig.

Der Kunststoffkörper kann beispielsweise Polycarbonate und/oder Polyurethane und/oder Acryl PMMA umfassen.

In einer bevorzugten Ausführungsform umfasst der Kunststoffkörper und/oder die Oberflächenstruktur ein transparentes oder semi-transparentes Material.

Als durchleuchtbar im Sinne der Erfindung kann ein Kunststoffkörper insbesondere bezeichnet werden, wenn er entlang einer Tiefenrichtung, d.h. insbesondere von seiner Rückseite zu seiner Vorderseite, Licht im sichtbaren Spektrum zumindest teilweise bzw. zumindest schwach durchscheinen lässt. Insbesondere gilt ein Kunststoffkörper im Sinne der Erfindung als durchleuchtbar, sofern an einer Rückseite oder entlang einer Kante des Kunststoffkörpers einfallendes oder eingespeistes sichtbares Licht innerhalb des Kunststoffkörpers und/oder an der dreidimensionalen Oberflächenstruktur des Kunststoffkörpers gestreut und/oder reflektiert wird und den Kunststoffkörper zumindest teilweise entlang einer vorderseitigen Oberfläche verlässt.

In einer bevorzugten Ausführungsform weist der Kunststoffkörper eine Tiefe von 1 mm bis 7 mm, vorzugsweise von 2 mm bis 5 mm, auf.

Die Strukturierungstiefe der Oberflächenstruktur beträgt in einer Ausführungsform 0,3 mm bis 5 mm mm und vorzugsweise höchstens 1,0 mm bis 1,5 mm. Die Tiefe des Kunststoffkörpers minus die Strukturierungstiefe beträgt vorzugsweise 2 - 3 mm. Eine obere Schranke für die Strukturierungstiefe kann in der Praxis bestimmt werden durch das verwendete Spritzgussverfahren oder Gussverfahren und die Bauteilsteifigkeit des Kunststoffkörpers. Die Tiefe des Kunststoffkörpers minus die Strukturierungstiefe gibt ein Maß für die Bauteilsteifigkeit des Kunststoffkörpers.

Solche Kunststoffkörper lassen sich beim Einsatz geeigneter transparenter oder semitransparenter Materialien ohne signifikanten Energieverlust und ohne starke Wärmeentwicklung von bekannten Leuchtmitteln wie Leuchtfolien oder LEDs durchscheinen und sind zudem einfach und flexibel an viele Einbausituationen und -geometrien anpassbar.

In einer bevorzugten Ausführungsform umfasst der Kunststoffkörper ein eingefärbtes Material. Dadurch lassen sich je nach Wunsch und Anwendung farbige Beleuchtungseffekte erzielen.

In einer bevorzugten Ausführungsform umfasst das Innenaussstattungselement eine Deckschicht, welche wenigstens abschnittsweise die Vorderseite und/oder die Rückseite des Kunststoffkörpers bedeckt.

Die Deckschicht kann eine transparente oder semi-transparente Schicht, insbesondere eine Farbschicht, umfassen.

Die Deckschicht kann auch eine reflektierende Schicht, insbesondere eine Metallschicht oder Chromschicht oder Lackschicht, umfassen.

In einer Weiterbildung bedeckt die Deckschicht die Oberflächenstruktur zumindest teilweise. Die Deckschicht kann alternativ oder zusätzlich auch dort auf der Vorderseite und/oder Rückseite des Kunststoffkörpers ausgebildet sein, wo die dreidimensionale Oberflächenstruktur nicht ausgebildet ist.

Der Deckschicht können im Zusammenwirken mit der erfindungsgemäßen Oberflächenstruktur unterschiedliche Funktionen zukommen. Als transparente oder semi-transparente Schicht kann sie sowohl auf der Vorderseite als auch auf der Rückseite des Kunststoffkörpers Farbeffekte hervorrufen und/oder den Kontrast der dargestellten dreidimensionalen Struktur erhöhen. Eine reflektierende Schicht auf der Rückseite des Kunststoffkörpers kann insbesondere aus dem Fahrzeuginnenraum einfallendes Licht reflektieren und eine kontrastreiche Darstellung der dreidimensionalen Struktur unter Tageslichtbedingungen befördern.

In einer bevorzugten Ausführungsform weist die Deckschicht Öffnungen und/oder Schlitze und/oder Löcher auf.

Dadurch lassen sich beispielsweise zusätzliche Beleuchtungseffekte erzielen. Insbesondere kann durch Öffnungen oder Schlitze in einer rückseitigen Deckschicht an ausgewählten Positionen entlang des Innenausstattungselements gezielt Licht in den Kunststoffkörper und in Richtung auf den Fahrzeuginnenraum eingestrahlt werden. Dazu können beispielsweise auch jeweils separate Lichtquellen vorgesehen werden.

In einer bevorzugten Ausführungsform ist die Oberflächenstruktur einstückig mit dem Kunststoffkörper ausgebildet. Insbesondere kann die Oberflächenstruktur aus dem gleichen Material wie der Kunststoffkörper ausgebildet sein. Dadurch lässt sich das Innenausstattungselement besonders einfach und kostengünstig herstellen.

In einer alternativen Ausführungsform kann die Oberflächenstruktur jedoch auch aus einem Material ausgebildet sein, welches sich von dem Material eines Grundkörpers des Kunststoffkörpers unterscheidet, insbesondere in seiner Lichtdurchlässigkeit und/oder in seiner Farbe unterscheidet. Dadurch lassen sich zusätzliche Beleuchtungseffekte erzielen.

Die Erfindung bezieht sich auch auf ein Verkleidungsbauteil für ein Fahrzeug mit einem Innenausstattungselement nach einem der vorangehenden Ansprüche.

Da sich das Innenausstattungselement in nahezu jeder beliebigen Form gießen oder spritzgießen lässt, kann es in einer Vielzahl von unterschiedlichen Verkleidungsbauteilen integriert werden. Dazu gehören beispielsweise die Instrumententafel, die Türverkleidung, die Mittelkonsole oder auch die Deckenverkleidung eines Fahrzeugs.

In einer bevorzugten Ausführungsform umfasst das Verkleidungsbauteil eine Öffnung zur Aufnahme des Innenausstattungselements, wobei die Öffnung insbesondere eine Öffnung oder ein Schlitz zwischen einem ersten Teilelement des Verkleidungsbauteils und einem zweiten Teilelement des Verkleidungsbauteils ist.

Das Innenausstattungselement kann insbesondere nachträglich oder reversibel in die Öffnung oder in den Schlitz eingesetzt werden. Dies ermöglicht es, Fahrzeuge in Großserie wahlweise mit der oder ohne die erfindungsgemäße Innenraumbeleuchtung auszustatten. Auch kann die erfindungsgemäße Innenraumbeleuchtung nach Wunsch nachträglich eingebaut oder ausgetauscht werden.

In einer Weiterbildung umfasst das Verkleidungsbauteil auch ein Beleuchtungselement zum Einstrahlen von Licht in den Kunststoffkörper.

Das Beleuchtungselement ist vorzugsweise derart positioniert, dass das eingestrahlte Licht innerhalb des Kunststoffkörpers und an der Oberflächenstruktur reflektiert und/oder gestreut wird und den Kunststoffkörper zumindest teilweise durch eine vorderseitige Oberfläche, d.h. insbesondere in Richtung auf den Fahrzeuginnenraum, verlässt.

Das Beleuchtungselement ist vorzugsweise entlang einer Seitenkante des Kunststoffkörpers angeordnet und strahlt Licht durch die Seitenkante in den Kunststoffkörper ein.

Das Beleuchtungselement kann lichtemittierende Dioden und/oder einen Lichtleiter und/oder ein Lichtband umfassen.

In einer bevorzugten Ausführungsform ist das Beleuchtungselement von der vorderseitigen Oberfläche des Kunststoffkörpers, d.h. insbesondere vom Fahrzeuginnenraum aus, nicht sichtbar.

Auf diese Weise lässt sich eine für Fahrzeugführer und Passagiere blendfreie, angenehme Innenraumbeleuchtung sicherstellen.

Die Erfindung bezieht sich auch auf ein Verfahren zum Ausbilden eines beleuchtbaren Innenausstattungselements mit den Schritten des Gießens oder Spritzgießens eines zumindest in einer Tiefenrichtung durchleuchtbaren Kunststoffkörpers und des Ausbildens einer dreidimensionalen Oberflächenstruktur mit einer Strukturierungstiefe von wenigstens 0,3 mm auf einer Vorderseite und/oder einer Rückseite des Kunststoffkörpers.

In einer bevorzugten Ausführungsform wird die dreidimensionale Oberflächenstruktur einstückig mit dem Kunststoffkörper gegossen bzw. spritzgegossen.

In einer alternativen Ausführungsform wird die dreidimensionale Oberflächenstruktur in einem nachfolgenden Prozessschritt mit dem Kunststoffkörper verbunden.

Die Oberflächenstruktur kann dabei insbesondere aus einem Material ausgebildet werden, welches sich von dem Material des Kunststoffkörpers unterscheidet, insbesondere in seiner Lichtdurchlässigkeit und/oder in seiner Farbe unterscheidet.

In einer Weiterbildung umfasst das Verfahren den Schritt des Aufbringens einer Deckschicht auf die Vorderseite und/oder Rückseite des Kunststoffkörpers. Die Deckschicht kann insbesondere eine transparente oder semi-transparente Deckschicht, vorzugsweise eine Farbschicht, oder eine reflektierende Deckschicht, vorzugsweise eine Metallschicht oder Chromschicht oder Lackschicht sein.

In einer Weiterbildung der Erfindung wird die Deckschicht auf den Kunststoffkörper aufgedruckt.

Insbesondere kann die Deckschicht indirekt über eine Folie als Zwischenträger auf den Kunststoffkörper gedruckt werden.

Das Drucken, insbesondere das indirekte Drucken über eine Folie als Zwischenträger, erlaubt es, Farbschichten mit nahezu jedem gewünschten Muster schnell und kostengünstig auf den Kunststoffkörper aufzubringen. Dadurch lässt sich eine große Vielfalt von Lichteffekte erreichen.

Die Deckschicht kann insbesondere auf die Oberflächenstruktur aufgebracht werden.

In einer Weiterbildung umfasst das Verfahren den Schritt des Ausbildens einer Öffnung in der Deckschicht. Insbesondere kann die Öffnung in die Deckschicht gefräst oder geätzt oder mittels eines Lasers in die Deckschicht geschnitten werden. Dadurch lassen sich schnell und einfach beliebig strukturierte Deckschichten ausbilden.

Das Innenausstattungselement kann insbesondere ein Innenausstattungselement mit einem oder allen der vorangehend beschriebenen Merkmalen sein.

### Beschreibung bevorzugter Ausführungsformen

Die Merkmale und zahlreichen Vorteile der erfindungsgemäßen beleuchtbaren Innenausstattung lassen sich am besten aus einer detaillierten Beschreibung bevorzugter Ausführungsformen anhand der anliegenden Figuren verstehen, in denen:
Fig. 1 ein Verkleidungsbauteil für eine Armaturentafel mit einer indirekten Innenraumbeleuchtung gemäß einer Ausführungsform der Erfindung zeigt;
Fig. 2 einen Querschnitt des Verkleidungsbauteils der Fig. 1 zeigt;
Fig. 3 eine schematische perspektivische Ansicht eines beleuchtbaren Kunststoffkörpers des in den Figuren 1 und 2 gezeigten Verkleidungsbauteils darstellt;
Fig. 4 eine schematische perspektivische Ansicht einer dreidimensionalen Oberflächenstruktur eines Kunststoffkörpers gemäß einer ersten Variante der Erfindung zeigt;
Fig. 5 eine schematische perspektivische Ansicht einer dreidimensionalen Oberflächenstruktur eines Kunststoffkörpers gemäß einer zweiten Variante der Erfindung zeigt;
Fig. 6 eine schematische perspektivische Ansicht eines Kunststoffkörpers mit dreidimensionaler Oberflächenstruktur gemäß einer dritten Variante der Erfindung zeigt;
Fig. 7a das Einkoppeln von Licht in den erfindungsgemäßen Kunststoffkörper gemäß einer ersten Variante der Erfindung zeigt;
Fig. 7b das Einkoppeln von Licht in den Kunststoffkörper gemäß einer zweiten Variante der Erfindung zeigt;
Fig. 8a eine perspektivische Ansicht eines Kunststoffkörpers mit Deckschicht gemäß einer ersten Ausführungsform der Erfindung zeigt; und
Fig. 8b eine perspektivische Ansicht eines Kunststoffkörpers mit Oberflächenstruktur und Deckschicht gemäß einer zweiten Ausführungsform der Erfindung zeigt.

Die Erfindung wird nachfolgend am Beispiel eines beifahrerseitig in ein Armaturenbrett integrierten Beleuchtungspaneels beschrieben. Ein erfindungsgemäßes beleuchtbares Innenausstattungselement kann jedoch aufgrund der einfachen Herstellung und der großen Freiheit bei der Formgestaltung in nahezu jedes Verkleidungsbauteil eines Fahrzeugs integriert werden.

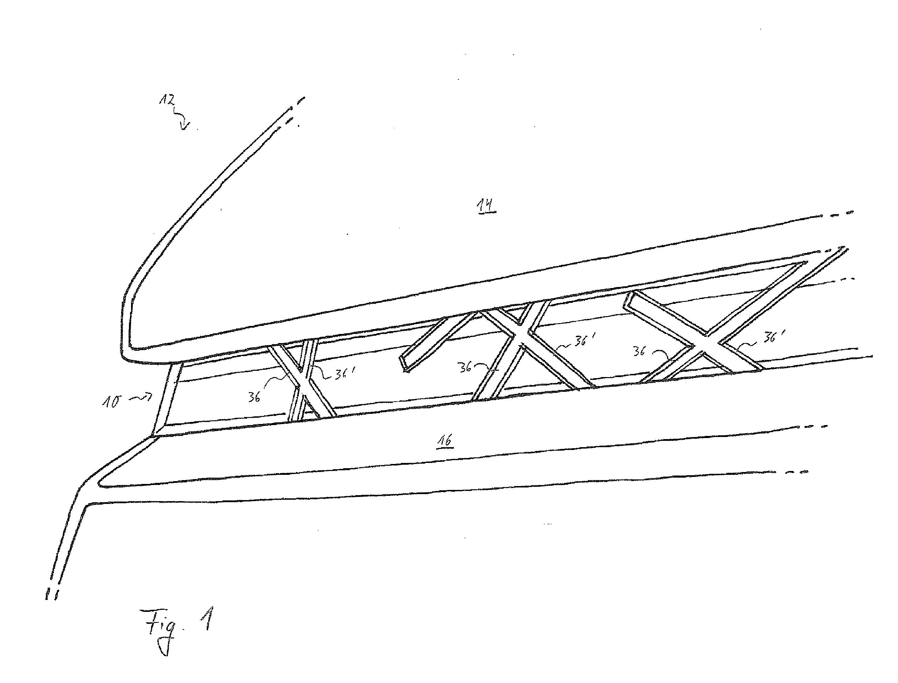

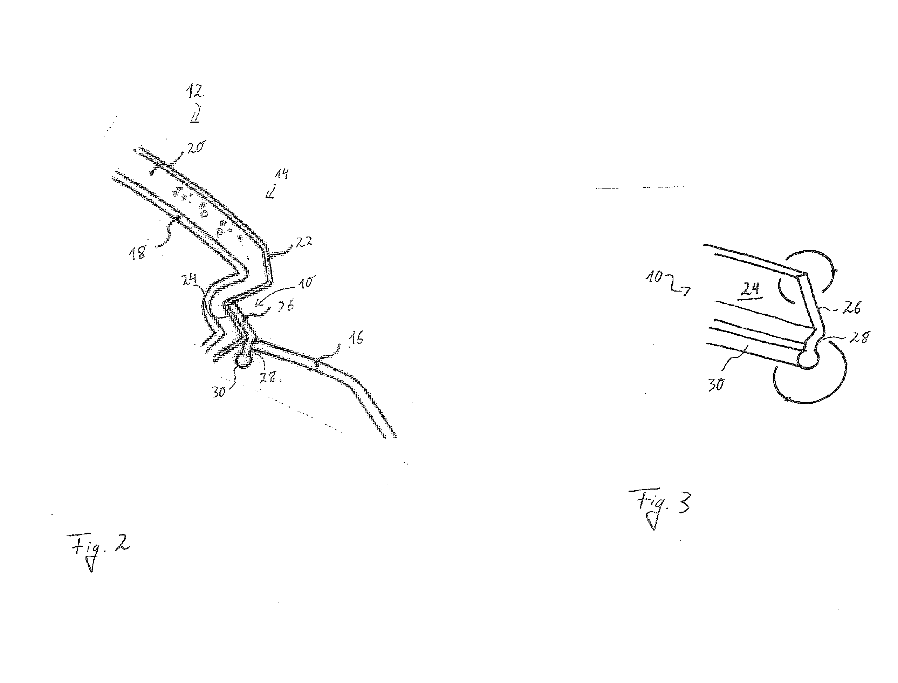

Fig. 1 zeigt eine perspektivische Ansicht eines länglichen, bandförmigen Beleuchtungspaneels 10, welches zumindest teilweise in eine Öffnung zwischen einem oberen Teilelement 14 eines Verkleidungsbauteils 12 und einem unteren Teilelement 16 des Verkleidungsbauteils 12 aufgenommen ist. Wie am Besten aus der Querschnittsdarstellung der Fig. 2 durch das Verkleidungsbauteil 12 zu erkennen ist, kann das obere Teilelement 14 einen mehrschichtigen Aufbau umfassen mit einer Trägerschicht 18, auf welcher eine dünne flexible Kaltschaumschicht 20 ausgebildet ist, die wiederum zum Fahrgastinnenraum durch eine Kunststoffschicht oder Lederschicht als Haut oder Deckschicht 22 abgeschlossen ist. Das untere Teilelement 16 des Verkleidungsbauteils 12 kann entsprechend ausgebildet oder, wie in Fig. 2 gezeigt, einschichtig ausgebildet sein.

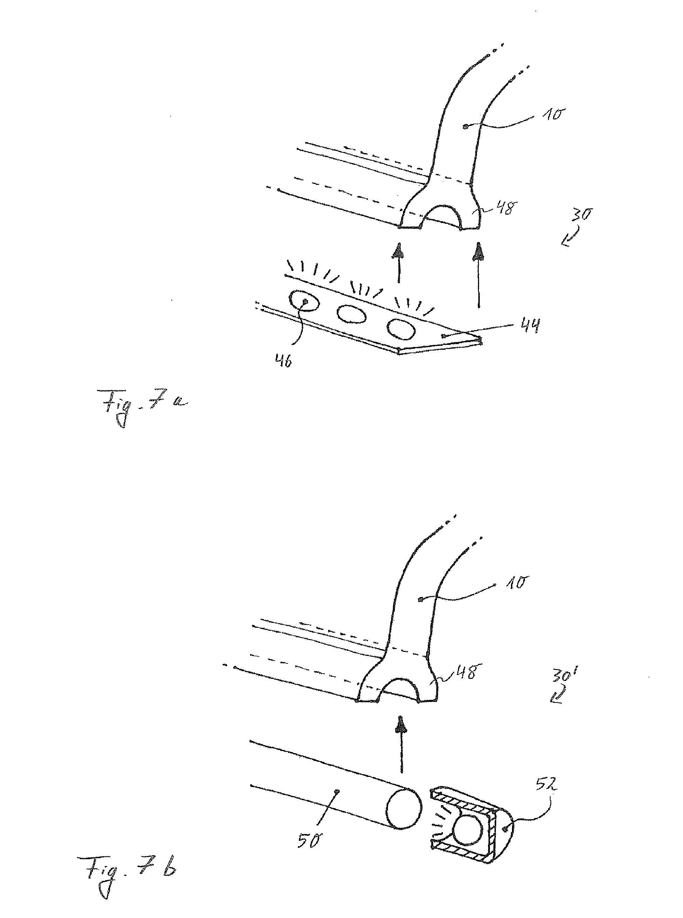

Das Beleuchtungspaneel 10 liegt mit einer Rückseite 24 an dem oberen Teilelement 14 des Verkleidungsbauteils 12 an und ist an dem oberen Teilelement 14 und/oder an dem unteren Teilelement 16 befestigt. Die Befestigungsmittel sind so ausgelegt, daß die optisch ansprechende und hochwertige Lichtstreuungs- und Lichtreflektionsempfindung nicht gestört wird. Die Befestigungsmittel befinden sich in einer bevorzugten Ausführungsform außerhalb des Sichtbereiches und können beispielsweise versteckte Befestigungselemente und/oder eine nicht sichtbare Verklebung umfassen. Die Vorderseite 26 des Beleuchtungspaneels 10 ist dem Fahrgastinnenraum zugewandt. Über einen unteren Fortsatz 28, welcher einstückig mit dem Beleuchtungspaneel 10 verbunden ist und in die Schlitzöffnung zwischen einer Unterkante des oberen Teilelements 14 und einer Oberkante des unteren Teilelements 16 des Verkleidungsbauteils 12 aufgenommen ist, ist das Beleuchtungspaneel 10 mit einem Beleuchtungselement 30, welches nachfolgend mit Bezug auf die Figuren 7a und 7b genauer beschrieben werden wird, verbunden.

Fig. 3 zeigt das Beleuchtungspaneel 10 mit dem Beleuchtungselement 30 in einer schematischen perspektivischen Darstellung. Das Beleuchtungspaneel 10 ist aus transparentem oder semi-transparentem Kunststoff, beispielsweise einem Polycarbonat oder einem Polyurethan oder Acryl PMMA, spritzgegossen und weist eine Tiefe von beispielsweise 2 - 5 mm auf. Von dem Beleuchtungselement 30 an der Unterseite des Beleuchtungspaneels 10 eingespeistes Licht wird im Inneren des Beleuchtungspaneels 10 reflektiert und/oder gestreut und verlässt das Beleuchtungspaneel 10 teilweise über die vorderseitige Oberfläche 26 als diffuses, indirektes Streulicht zur Innenraumbeleuchtung.

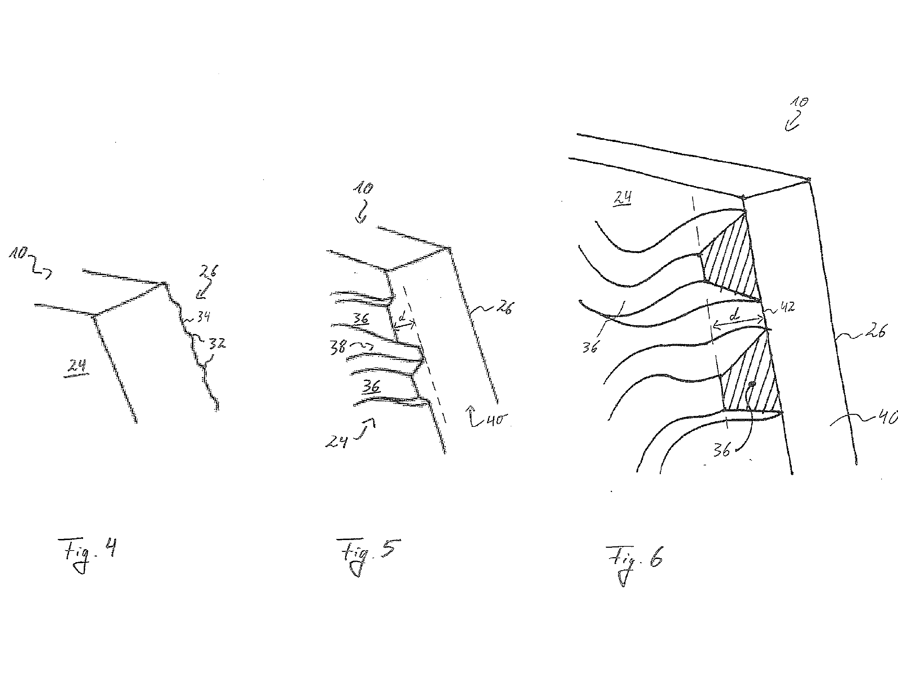

Die Vorderseite 26 und/oder die Rückseite 24 des Beleuchtungspaneels 10 weist erfindungsgemäß eine dreidimensionale Oberflächenstruktur mit einer Strukturierungstiefe von wenigstens 0,3 mm auf. Fig. 4 zeigt exemplarisch eine Konfiguration, in welcher die Vorderseite 26 des Beleuchtungspaneels 10 eine Vielzahl kleiner halbkugelförmiger Erhebungen 32 umfasst. Jede der halbkugelförmigen Erhebungen 32 ist gegenüber der Basisebene 34 der Vorderseite 26 um ca. 0,4 mm bis 0,5 mm erhöht. Die Rückseite 24 des Beleuchtungspaneels 10 ist dagegen in dieser Ausführungsform glatt ausgebildet.

In einer alternativen, in Fig. 5 gezeigten Konfiguration ist dagegen die Vorderseite 26 des Beleuchtungspaneels 10 eben ausgebildet, während auf der Rückseite 24 mehrere streifenförmige Erhebungen 36 ausgebildet sind, die sich mit streifenförmigen Vertiefungen 38 abwechseln. Der Abstand d zwischen einem Scheitel der streifenförmigen Erhebung 36 und einer Sohle der benachbarten streifenförmigen Vertiefung 38, d.h. die Strukturierungstiefe der rückseitigen Reliefstruktur des Beleuchtungspaneels 10, beträgt in der gezeigten Ausführungsform ca. 1 mm bis 1,5 mm, kann jedoch auch größer oder kleiner ausgebildet werden, je nach der gewünschten Anwendung.

Die Reliefstruktur der Figuren 4 und 5 an der Vorderseite 26 bzw. Rückseite 24 des Beleuchtungspaneels 10 führt beim Einspeisen von Licht aus dem Beleuchtungselement 30 zu zusätzlichen Streueffekten bzw. Reflektionseffekten, welche dem Beleuchtungspaneel 10 im beleuchteten Zustand eine dreidimensional anmutende Struktur geben. Wenn die Reliefstruktur eine Strukturierungstiefe von wenigstens 0,3 mm aufweist, ist diese Struktur auch tagsüber, d.h. auch wenn die Beleuchtung nicht aktiviert ist, gut zu erkennen, weil das vom Fahrzeuginnenraum in das Beleuchtungspaneel 10 einfallende Licht an der Oberflächenstruktur reflektiert und/oder gestreut wird.

Im Guss- oder Spritzgussverfahren lässt sich das Kunststoffpaneel 10 mit nahezu jeder gewünschten Oberflächenstruktur schnell und kostengünstig herstellen, so dass sich durch eine entsprechend gewählte Strukturierung eine Vielzahl möglicher Beleuchtungseffekte einstellen lässt. Fig. 1 veranschaulicht das Erscheinungsbild eines Beleuchtungspaneels 10, bei welchem die Oberflächenstruktur aus einander kreuzenden streifenförmigen Erhebungen 36, 36' gebildet wird. Diese Struktur erinnert unter geeigneter Beleuchtung entfernt an Eiskristalle. Neben solchen natürlichen Formen lassen sich auch dreidimensionale Oberflächenstrukturen herstellen, die Schriftelemente, Buchstaben- oder Zahlsymbole umfassen.

Fig. 6 zeigt eine der Fig. 5 ähnliche Reliefstruktur mit streifenförmigen Erhebungen 36 auf der Rückseite 24 des Beleuchtungspaneels 10. Während jedoch die Oberflächenstruktur der Fig. 5 zusammen mit dem Grundkörper 40 einstückig im Spritzgussverfahren hergestellt ist, zeigt die Struktur der Fig. 6 einen zweischichtigen Aufbau. In einem Zweikomponentenverfahren wird zunächst der Grundkörper 40 des Beleuchtungspaneels 10 aus einem transparenten Kunststoffmaterial ausgebildet. Auf die Rückseite 24 des Grundkörpers 40 werden dann die streifenförmigen Erhebungen 36 aufgebracht und mit dem Grundkörper 40, beispielsweise in einem Schmelzverfahren, verbunden. Die streifenförmigen Erhebungen 36 können aus einem Kunststoffmaterial ausgebildet sein, welches eine von dem Grundkörper 40 verschiedene Farbe und/oder eine von dem Grundkörper 40 verschiedene Lichtdurchlässigkeit aufweist. Auf diese Weise lassen sich zusätzliche Beleuchtungseffekte erzielen. Die Strukturierungstiefe dieser Oberflächenstruktur ist der in Tiefenrichtung gemessene Abstand d zwischen einem Scheitel der streifenförmigen Erhebung 36 und der rückseitigen Basisebene 42 des Grundkörpers 40 und beträgt beispielsweise 1 mm bis 1,5 mm.

Die Figuren 7a und 7b zeigen zwei alternative Ausführungsformen für Beleuchtungselemente 30, 30', wie sie vorteilhafterweise zum Einspeisen von Licht in das Beleuchtungspaneel 10 Verwendung finden können. Das in Fig. 7a gezeigte Beleuchtungselement 30 umfasst ein Lichtband 44, auf welchem eine Vielzahl lichtemittierender Dioden 46 in regelmäßigen Abständen angeordnet sind. Das Lichtband 44 wird mit einer Seitenkante 48 des Beleuchtungspaneels 10 verbunden. Die lichtemittierenden Dioden 46 strahlen dann von der Unterseite aus Licht in das Beleuchtungspaneel 10 ein.

In der alternativen Ausführungsform der Fig. 7b umfasst das Beleuchtungselement 30' ein Lichtleiterkabel 50, welches in eine halbkreisförmige Öffnung an der Seitenkante 48 des Beleuchtungspaneels 10 eingeklemmt werden kann und von einer endseitig angebrachten Lichtquelle 52 versorgt wird. Das von der Lichtquelle 52 emittierte Licht gelangt über das Lichtleiterkabel 50 in das Beleuchtungspaneel 10 und von dort durch Streuung und/oder Reflexion in den Fahrzeuginnenraum. In der Erfindung können auch andere Beleuchtungselemente Verwendung finden.

Das Beleuchtungselement 30 ist im eingebauten Zustand vom Fahrzeuginnenraum aus nicht direkt sichtbar, so dass sich ein indirekter, als angenehm empfundener, blendfreier Beleuchtungseffekt einstellt.

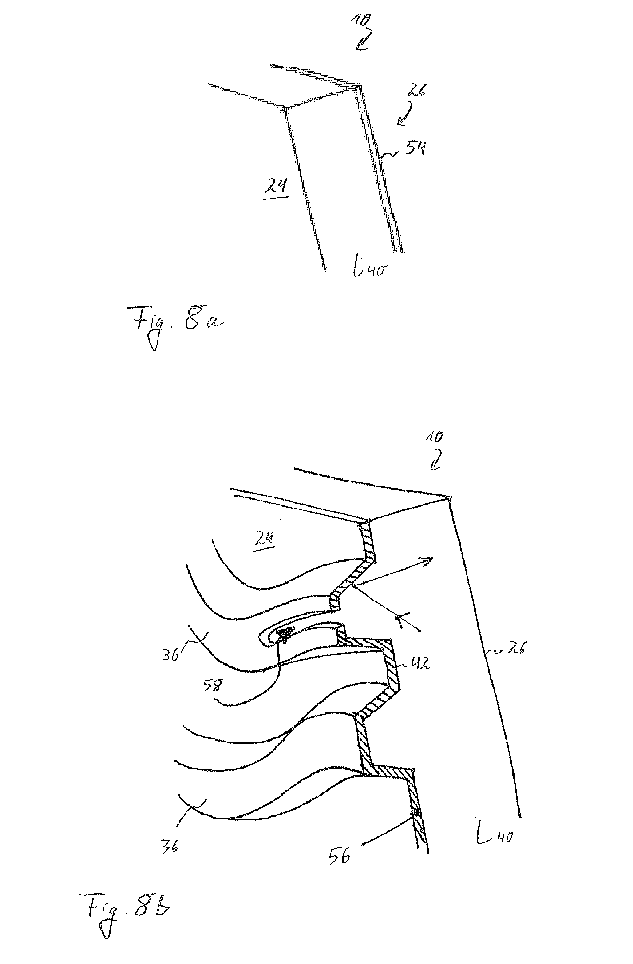

Das Kunststoffmaterial des Beleuchtungspaneels 10 kann in Ausführungsformen der Erfindung eingefärbt sein, um in der Beleuchtung zusätzliche Farbeffekte zu erzielen. Ebenso können auf der Rückseite 24 und/oder auf der Vorderseite 26 des Beleuchtungspaneels 10 farbige oder reflektierende Strukturen aufgebracht sein, beispielsweise Farbflächen, Muster oder Symbole. Fig. 8a zeigt ein Beleuchtungspaneel 10 mit einer farbigen flächigen Deckschicht 54 an der Vorderseite 26 des Beleuchtungspaneels 10. Die erfindungsgemäße Reliefstruktur kann in dieser Ausführungsform sowohl an der Vorderseite 26 als auch an der Rückseite 24 des Beleuchtungspaneels 10 ausgebildet sein und ist in Fig. 8a aus Gründen der Übersichtlichkeit nicht gezeigt.

Die Deckschicht 54 kann auf die Oberflächen des Beleuchtungspaneels 10 in einem indirekten Druckverfahren aufgebracht werden, bei welchem das zu druckende Farbmuster zunächst auf eine Zwischenfolie aufgebracht und von der Zwischenfolie auf die Rückseite 24 bzw. Vorderseite 26 des Beleuchtungspaneels 10 übertragen wird. Mit diesem Verfahren lassen sich Deckschichten 54 jeglicher Form und Zusammensetzung aufbringen.

Eine alternative Konfiguration mit einer die Reliefstruktur an der Rückseite 24 des Beleuchtungspaneels 10 bedeckenden reflektierenden Deckschicht 56 ist in Fig. 8b gezeigt. Die reflektierende Deckschicht 56, beispielsweise eine Chromschicht, überdeckt die streifenförmigen Erhebungen 36 auf der Rückseite 24 des Beleuchtungspaneels 10 ebenso wie die Basisebene 42. Vorderseitig aus dem Fahrzeuginnenraum einfallendes Licht bzw. von dem Beleuchtungselement 30 in das Beleuchtungspaneel 10 eingespeistes Licht wird an der reflektierenden Deckschicht 56 reflektiert (in Fig. 8b durch Pfeile angedeutet), so dass der Kontrast erhöht und der Beleuchtungseffekt der Reliefstruktur verstärkt wird.

In der reflektierenden Deckschicht 56 können Schlitzöffnungen 58 ausgebildet sein, wie in Fig. 8b gezeigt. Eine solche Reliefstruktur lässt sich ausbilden, indem zunächst eine durchgehende reflektierende Deckschicht aufgetragen wird, welche die Rückseite 24 des Beleuchtungspaneels 10 und die streifenförmigen Erhebungen 36 vollständig bedeckt, und anschließend unter Verwendung eines Lasers Öffnungen in die Deckschicht 56 geschnitten werden. Die Schlitzöffnungen 58 bewirken zusätzliche Lichteffekte, weil an diesen Stellen der Deckschicht 56 keine Reflektion stattfindet. In Ausführungsformen der Erfindung können die Schlitzöffnungen 58 auch dazu dienen, zusätzlich Licht in das Beleuchtungspaneel 10 einzuspeisen, beispielsweise von dem Beleuchtungselement 30 oder von einer jeweils separaten Lichtquelle (in Fig. 8b nicht gezeigt). Die zusätzliche Lichtquelle kann sich in der Lichtfarbe und/oder Lichtintensität von der primären Lichtquelle des Beleuchtungselements 30 unterscheiden.

Die Schlitzöffnungen 58 können auch mittels eines Ätzverfahrens oder Fräsverfahrens in der reflektierenden Deckschicht 56 ausgebildet werden.

Die Beschreibung der Ausführungsformen und die Zeichnungen dienen allein der Veranschaulichung der Erfindung und der mit ihr erzielten Vorteile, sollen die Erfindung aber nicht beschränken. Der Umfang der Erfindung ergibt sich allein aus den nachfolgenden Ansprüchen.

### Bezugszeichen

- 10: Beleuchtungspaneel
- 12: Verkleidungsbauteil
- 14: oberes Teilelement des Verkleidungsbauteils 12
- 16: unteres Teilelement des Verkleidungsbauteils 12
- 18: Trägerschicht des oberen Teilelements 14
- 20: Kaltschaumschicht
- 22: Deckschicht
- 24: Rückseite des Beleuchtungspaneels 10
- 26: Vorderseite des Beleuchtungspaneels 10
- 28: Fortsatz des Beleuchtungspaneels 10
- 30, 30': Beleuchtungselemente
- 32: halbkugelförmige Erhebungen
- 34: Basisebene der Vorderseite 26
- 36, 36': streifenförmige Erhebungen
- 38: streifenförmige Vertiefungen
- 40: Grundkörper des Beleuchtungspaneels 10
- 42: Basisebene der Rückseite 24
- 44: Lichtband
- 46: LEDs
- 48: Seitenkante des Beleuchtungspaneels 10
- 50: Lichtleiterkabel
- 52: Lichtquelle
- 54: farbige Deckschicht
- 56: reflektierende Deckschicht
- 58: Schlitzöffnungen

## Patentansprüche

1. Beleuchtbares Innenausstattungselement zur Aufnahme in ein Verkleidungsbauteil (12) eines Fahrzeugs, umfassend einen zumindest in einer Tiefenrichtung durchleuchtbaren Kunststoffkörper (10), welcher an seiner Vorderseite (26) und/oder an seiner Rückseite (24) eine dreidimensionale Oberflächenstruktur (32; 36, 36'; 38) mit einer Strukturierungstiefe (d) von wenigstens 0,3 mm aufweist.

2. Innenausstattungselement nach Anspruch 1, bei welchem die Oberflächenstruktur (32; 36, 36'; 38) eine Strukturierungstiefe (d) von wenigstens 0,4 mm, vorzugsweise wenigstens 0,6 mm und besonders vorzugsweise wenigstens 1 mm aufweist.

3. Innenausstattungselement nach Anspruch 1 oder 2, bei welchem die dreidimensionale Oberflächenstruktur Erhebungen (32) und/oder Vertiefungen umfasst, insbesondere Erhebungen und/oder Vertiefungen mit gekrümmter Oberfläche, vorzugsweise ellipsoider oder halbkugelförmiger Oberfläche, und/oder Erhebungen und/oder Vertiefungen mit abgekanteter Oberfläche, umfasst.

4. Innenausstattungselement nach einem der vorangehenden Ansprüche mit einer Deckschicht (54; 56), welche wenigstens abschnittsweise die Vorderseite (26) und/oder die Rückseite (24) des Kunststoffkörpers (10) bedeckt, wobei die Deckschicht eine transparente oder semi-transparente Schicht (54), insbesondere eine Farbschicht, und/oder eine reflektierende Schicht (56), insbesondere eine Metallschicht oder Chromschicht oder Lackschicht, umfasst.

5. Innenausstattungselement nach Anspruch 4, bei welchem die Deckschicht (54; 56) die Oberflächenstruktur (32; 36, 36'; 38) zumindest teilweise bedeckt.

6. Innenausstattungselement nach Anspruch 4 oder 5, bei welchem die Deckschicht (56) Öffnungen und/oder Schlitze (58) und/oder Löcher aufweist.

7. Innenausstattungselement nach einem der vorangehenden Ansprüche, bei welchem die Oberflächenstruktur (32; 36, 36'; 38) einstückig mit dem Kunststoffkörper (10) ausgebildet ist, insbesondere aus dem gleichen Material wie der Kunststoffkörper (10) ausgebildet ist, oder bei welchem die Oberflächenstruktur (32; 36, 36'; 38) aus einem Material ausgebildet ist, welches sich von dem Material des Kunststoffkörpers (10) unterscheidet, insbesondere in seiner Lichtdurchlässigkeit und/oder in seiner Farbe unterscheidet.

8. Verkleidungsbauteil (12) für ein Fahrzeug mit einem Innenausstattungselement nach einem der vorangehenden Ansprüche.

9. Verkleidungsbauteil (12) nach Anspruch 8 mit einem Beleuchtungselement (30, 30') zum Einstrahlen von Licht in den Kunststoffkörper (10), wobei das Beleuchtungselement (30, 30') vorzugsweise derart positioniert ist, dass das eingestrahlte Licht innerhalb des Kunststoffkörpers (10) und an der Oberflächenstruktur (32; 36, 36'; 38) reflektiert und/oder gestreut wird und den Kunststoffkörper (10) zumindest teilweise durch eine vorderseitige Oberfläche (26) des Kunststoffkörpers (10) verlässt.

10. Verkleidungsbauteil (12) nach Anspruch 9, bei welchem das Beleuchtungselement (30, 30') entlang einer Seitenkante (48) des Kunststoffkörpers (10) angeordnet ist und Licht durch die Seitenkante (48) in den Kunststoffkörper (10) einstrahlt.

11. Verfahren zum Ausbilden eines beleuchtbaren Innenausstattungselements mit folgenden Schritten:
Gießen oder Spritzgießen eines zumindest in einer Tiefenrichtung durchleuchtbaren Kunststoffkörpers (10); und
Ausbilden einer dreidimensionalen Oberflächenstruktur (32; 36, 36'; 38) mit einer Strukturierungstiefe (d) von wenigstens 0,3 mm auf einer Vorderseite (26) und/oder einer Rückseite (24) des Kunststoffkörpers (10).

12. Verfahren nach Anspruch 11, bei welchem die dreidimensionale Oberflächenstruktur (32; 36, 36'; 38) einstückig mit dem Kunststoffkörper (10) gegossen bzw. spritzgegossen wird, oder bei welchem die dreidimensionale Oberflächenstruktur (32; 36, 36'; 38) in einem nachfolgenden Prozessschritt mit dem Kunststoffkörper (10) verbunden wird.

13. Verfahren nach einem der Ansprüche 11 oder 12 mit dem Schritt des Aufbringens einer Deckschicht (54; 56) auf den Kunststoffkörper (10), insbesondere einer transparenten oder semi-transparenten Deckschicht (54), vorzugsweise einer Farbschicht, und/oder einer reflektierenden Deckschicht (56), vorzugsweise einer Metallschicht oder Chromschicht oder Lackschicht.

14. Verfahren nach Anspruch 13, bei welchem die Deckschicht (54; 56) auf den Kunststoffkörper (10) gedruckt wird, insbesondere indirekt über eine Folie als Zwischenträger auf den Kunststoffkörper (10) gedruckt wird.

15. Verfahren nach einem der Ansprüche 13 oder 14 mit dem Schritt des Ausbildens einer Öffnung (58) in der Deckschicht (54; 56), wobei die Öffnung (58) insbesondere mittels eines Lasers in die Deckschicht (54; 56) geschnitten wird.
